# EUROPEAN PATENT APPLICATION

(11) **EP 3 514 692 A1**
(43) Date of publication of application: **24.07.2019**
(21) Application number: 18152770.6
(22) Date of filing: 22.01.2018
(51) Int. Cl.: G06F 13/40, H04L 12/26

(54) **CONFIGURABLE INTERCONNECT CABLE, CONFIGURABLE INTERFACE, AND METHOD FOR CONFIGURING AN INTERFACE**

(71) Applicant: Vestel Elektronik Sanayi ve Ticaret A.S., 45030 Manisa (TR)
(72) Inventor: AKGÜL, Burak, 45030 Manisa (TR)
(74) Representative: Thomas, Michael Andrew

(57) **Abstract**

There is provided a configurable interconnect cable (1) for connecting electronic devices together according to a predetermined interface standard. The interconnect cable (1) comprises a cable (15) having at least one connector (5) attached, the connector (5) comprising a plurality of pins (40, 45, 50, 55), each assigned to carry one of a plurality of signals defined for the interface according to a predetermined assignment of said signals to said pins (40, 45, 50, 55). The configurable interconnect cable comprises: a plurality of cable conductors (20, 25, 30, 35); and a conductor switching component (60) configured to determine which of the plurality of cable conductors (20, 25, 30, 35) is a faulty conductor and which is an operational conductor, and to link at least one of the determined operational cable conductors (20, 25, 30, 35) to a selected one of the plurality of pins (40, 45, 50, 55) of the connector (5).

## Description

### Technical Field

The present disclosure relates to a configurable interconnect cable, to a configurable interface and to method for configuring an interface.

### Background

It is known for electronic devices, for example computing devices, to be provided with one or more different types of interface to enable connection to other electronic devices by corresponding interconnect cables. In the example of computing devices, the other electronic devices may include peripheral devices such as keyboards, printers, separate storage devices, etc. One example type of widely used interface is a Universal Serial Bus (USB™) interface compliant with one of the USB standards published by the USB Implementers Forum, Inc.

The various defined USB interfaces, in common with other types of interface used with electronic devices, comprise both physical components and types of 'signal' defined for the interface. The physical elements may comprise various connector types having a number of electrical interface conductors, each assigned to carry one of the defined signals for the interface. In the case of a USB interface, signals (V_{cc}, GND) are defined for the transfer of electrical power via the interface and signals (Data+, Data-, GND) are defined for the transfer of data via the interface. Each electrical conductor of the interface is assigned to carry one of the signals defined for the interface.

### Summary

According to a first aspect disclosed herein, there is provided a configurable interconnect cable for connecting electronic devices together according to a predetermined interface standard, the interconnect cable comprising a cable having at least one connector attached to the cable, the connector comprising a plurality of pins, each assigned to carry one of a plurality of signals defined for the interface standard according to a predetermined assignment of said signals to said pins, the configurable interconnect cable comprising:
a plurality of cable conductors; and
a conductor switching component configured to determine which of the plurality of cable conductors is a faulty conductor and which is an operational conductor, and to link at least one of the determined operational cable conductors to a selected one of the plurality of pins of the connector.

The configurable interface enables different cable conductors to be linked to pins of the connector, and so carry their respective signals, according to which of the cable conductors is found to be operational. In conventional interconnect cables, the assignment of signals to conductors of the cable is fixed according to which pins they are connected. If a conductor of the cable breaks or otherwise becomes faulty, the assigned signal cannot be carried by the interconnect cable.

In an example, the conductor switching component is configured to allocate at least one of the determined operational cable conductors to a respective one of the plurality of signals of the interface and to select at least one of the plurality of pins of the connector to link to a respective at least one of the determined operational cable conductors according to the predetermined assignment.

The conductor switching component firstly determines which signals to allocate to operational cable conductors and then links the operational cable conductors to pins of the connector according to the signals assigned to them. This ensures that the signal allocated to each operational cable conductor matches the pre-assigned signal of the pin of the electronic device to which it is linked.

In an example, the conductor switching component is configured to receive an indication of a required use defined for the interconnect cable, the required use comprising carrying a predetermined at least one of the plurality of signals defined for the interface standard.

This ensures that the operational cable conductors are assigned to signals required for the intended use of the interconnect cable.

In an example, the conductor switching component is configured to allocate at least one of the determined operational cable conductors to a respective one of the plurality of signals according to the required use.

In an example, for the required use, a predetermined number of cable conductors is defined, and the conductor switching component is configured to indicate that the required use is not available if the number of determined operational cable conductors is less than the predetermined number of cable conductors for the required use.

For example, at least two cable conductors may be required to carry signals for the transfer electrical power and at least three cable conductors may be required to carry signals for the transfer of data. If the number of operational cable conductors is found to be less that two or three, then power transfer or data transfer, respectively, would not be available via the interconnect cable.

In an example, the plurality of signals defined for the interface comprise at least one signal for a supply of electrical power via the interface and at least one signal for a transfer of data via the interface.

According to a second aspect disclosed herein, there is provided a configurable interface for an electronic device, the electronic device having a plurality of electrical conductors, each assigned to carry one of a plurality of signals defined for the interface according to a predetermined assignment of said signals to said conductors, the configurable interface comprising:
a plurality of electrical interface conductors; and
a conductor switching component configured to determine which of the plurality of interface conductors is a faulty conductor and which is an operational conductor, and to link at least one of the determined operational interface conductors to a selected one of the plurality of conductors of the electronic device.

Pins of a connector are susceptible to damage over time. The configurable interface enables a required use for the interface to be achieved when one or more pins of the connector become faulty.

In an example of the configurable interface, the conductor switching component is configured to allocate at least one of the determined operational interface conductors to a respective one of the plurality of signals of the interface and to select at least one of the plurality of conductors of the electronic device to link to a respective at least one of the determined operational interface conductors according to the predetermined assignment.

In an example of the configurable interface, the conductor switching component is configured to receive an indication of a required use defined for the interface, the required use comprising carrying a predetermined at least one of the plurality of signals defined for the interface.

In an example of the configurable interface, the conductor switching component is configured to allocate at least one of the determined operational interface conductors to a respective one of the plurality of signals according to the required use.

In an example of the configurable interface, for the required use, a predetermined number of interface conductors is defined, and the conductor switching component is configured to indicate that the required use is not available if the number of determined operational interface conductors is less than the predetermined number of interface conductors for the required use.

In an example of the configurable interface, the plurality of electrical interface conductors comprise a plurality of pins of a connector defined for the interface.

According to a third aspect disclosed herein, there is provided a method for configuring an interface to an electronic device, the interface having a plurality of electrical conductors for connection to the electronic device, each assigned to carry one of a plurality of signals defined for the interface according to a predetermined assignment of said signals to said conductors, the interface comprising a plurality of cable conductors, and the method comprising:
(i) determining which of the plurality of cable conductors is a faulty conductor and which is an operational conductor; and
(ii) linking at least one of the determined operational cable conductors to a selected one of the plurality of conductors of the interface.

In an example of the method, (ii) comprises allocating at least one of the determined operational cable conductors from (i) to a respective one of the plurality of signals defined for the interface and selecting at least one of the plurality of conductors of the interface to link to a respective at least one of the determined operational cable conductors according to the predetermined assignment.

In an example of the method, (ii) comprises receiving an indication of a required use defined for the interface, the required use comprising carrying a predetermined at least one of the plurality of signals defined for the interface, and the protocol comprises allocating at least one of the determined operational cable conductors to a respective one of the plurality of signals according to the required use.

### Brief Description of the Drawings

To assist understanding of the present disclosure and to show how embodiments may be put into effect, reference is made by way of example to the accompanying drawings in which:
Figure 1 shows schematically an example of a configurable interconnect cable as disclosed herein;
Figure 2 is a flow diagram showing an example process for configuring a configurable interface cable as disclosed herein; and
Figure 3 shows schematically an example pair of electronic devices interconnected via an example of a configurable interface as disclosed herein.

### Detailed Description

In examples to be described below, a method is provided for changing the use of available interconnecting conductors in an interconnect cable having a connector attached at one or both ends of the cable, defined according to a predetermined interface standard. The interconnect cable may be used to interconnect two electronic devices, each having interfaces provided according to the standard.

In a particular example, the method is applied to an interconnect cable based upon one of the Universal Serial Bus (USB) standards, currently ranging from USB 1.0 to USB 3.2 and USB-C. However, as would be apparent to a person of ordinary skill in the relevant art, the method disclosed herein may be applied to any interconnecting arrangement, as may be provided between electronic devices, having a plurality of interconnecting conductors.

According to the published USB interface specifications, the number of pins in a connector and of associated conductors in an attached cable range in number from four to twenty four. For example, a four-pin A-type USB connector comprises pins and associated cable conductors allocated to carry the following signals:
V_{cc} (for the supply of electrical power through the interface)
GND (ground, for power and data transfer purposes)
Data+ (for serial data transfer in one direction)
Data- (for serial data transfer in the opposite direction)

In order to supply power to a connected device through such a USB connector and cable, two pins and associated cable conductors are required; to carry the V_{cc} and GND signals. In order to communicate data through such a USB connector and cable, three pins are required; to carry the Data+, Data- and GND signals. According to the existing USB specifications, each physical pin of a USB connector and associated cable conductor is allocated to carry a specific one of the signals. However, according to the present disclosure, the linkage of cable conductors to pins of the attached connector may be changed using a re-allocation protocol implemented for example by, and between, connectors attached to each end of the USB cable. An example of a re-allocation protocol will be described in detail below.

A USB cable may be used for example to link a computing device such as a desk-top, laptop or tablet computer to a peripheral device such as a printer or external storage device. A USB cable may also be used for example to interconnect a mobile phone or other portable electronic device and a computer, both for the transfer of data between the devices and for the charging of the battery of the portable device. A USB cable may also be used only for its conveyance of electric current, for example between a battery charger and a portable electronic device. However, if one or more conductors of the USB cable becomes damaged, for example if the V_{cc} conductor or one of the data conductors is damaged, a replacement of the USB interconnect cable is required. Such a cable, for the higher USB standards of USB 3.x and USB-C in particular, can be expensive.

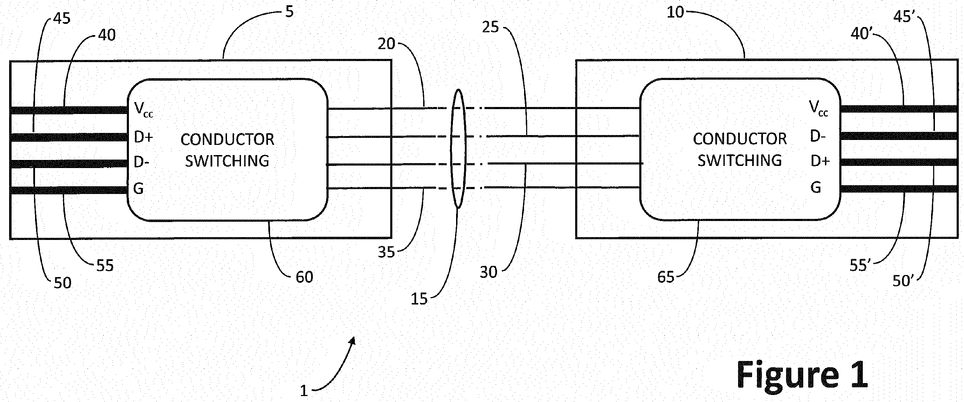

Similarly, for peripheral devices such as a keyboard or a USB mouse, the USB cable is often permanently connected within the device and provided with a USB-compliant connector at the other end of the cable. If the cable becomes damaged, the entire peripheral device would need to be replaced. Examples to be described below enable a damaged cable to continue in its intended use or in a limited range of uses which may be sufficient until a replacement can be provided. An example arrangement to achieve such a benefit will now be described, initially with reference to Figure 1, in the specific example of a USB interface. However, it would be apparent to a person of ordinary skill in the relevant art that the techniques disclosed herein may be applied to any interface standard wherein a physical interconnection involving multiple electrical conductors is to be provided.

Referring to Figure 1, there is shown schematically an interconnect cable 1 for use in connecting two electronic devices (not shown in Figure 1) together, where each electronic device is provided with a compatible interface. The interconnect cable comprises connectors 5, 10, for example USB connectors, fixed to each end of a cable 15. The cable 15 has four conductors 20, 25, 30, 35. Each of the connectors 5, 10 has four pins to which respective conductors 20, 25, 30, 35 of the cable 15 may be connected. The connector 5 has four pins 40, 45, 50, 55 and the connector 10 has four pins 40', 45', 50', 55'. Each pin of the connector 5, 10 is assigned, according to a predetermined assignment of signals to pins, to carry one of the signals defined for the interface. In this example of a USB interface, the pins 40, 45, 50, 55 of the connector 5 are assigned to carry the signals V_{cc}, Data+, Data- and GND respectively. Similarly, the pins 40', 45', 50', 55' of the connector 10 are assigned to carry the signals V_{cc}, Data-, Data+ and GND respectively.

Each connector 5, 10 is provided with a respective conductor switching component 60, 65 linked to the four pins 40-55, 40'-55' of the respective connector 5, 10 and to the conductors 20, 25, 30, 35 of the cable 15. Each conductor switching component 60, 65 therefore provides a switchable link between the conductors 20, 25, 30, 35 of the cable 15 and the pins 40-55, 40'-55' of the respective connector 5, 10.

The conductor switching component 60 is arranged to link selected pins of the four pins 40-55 of the connector 5 to one of the four conductors 20, 25, 30, 35 of the cable 15. Similarly, the conductor switching component 60 is arranged to link selected pins of the four pins 40'-55' of the connector 10 to one of the four conductors 20, 25, 30, 35 of the cable 15. The route followed by signals carried by each of the connected pins 40-55 of the connector 5 through the cable 15 to the corresponding connected pins 40'-55' of the connector 10 may therefore be controlled and changed by agreement between the conductor switching components 60, 65.

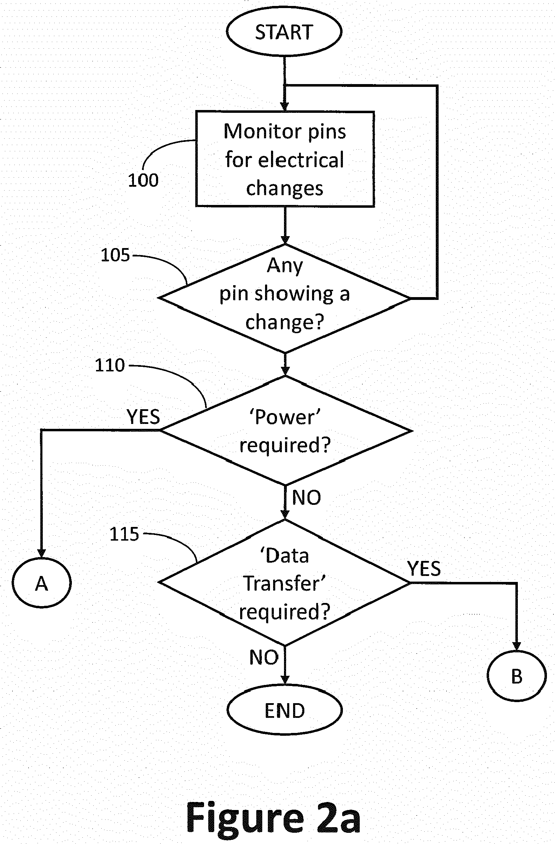

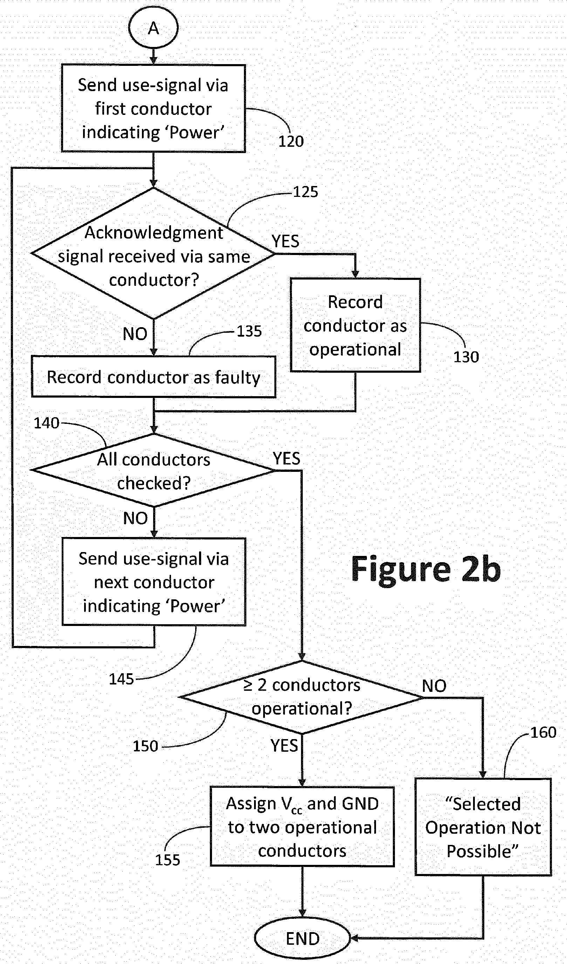

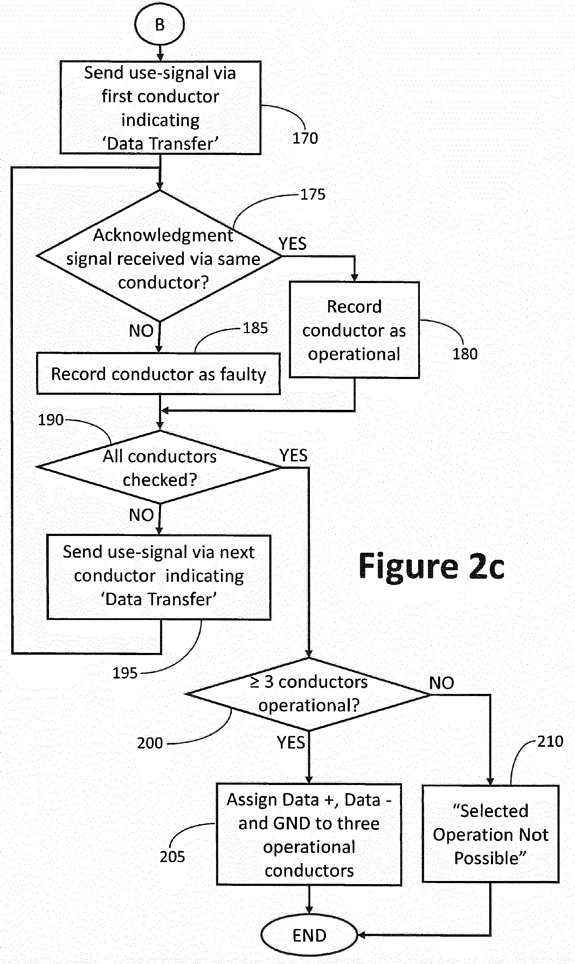

In particular, the conductor switching components 60, 65 may implement a protocol for allocating one or more of the conductors 20-35 in the cable 15 to carry a respective one or more of the signals defined for the interface according to the relevant standard. The conductor switching components 60, 65, having agreed the allocation, then links each of the one or more conductors 20, 25, 30, 35 that has been allocated to carry one of the signals to the pin 40-55, 40'-55' of the respective connector 5, 10 assigned to carry the allocated signal according to the predetermined assignment of signals to pins. An example of such a protocol and allocation method will now be described with reference to Figure 2.

Referring to Figure 2, a flow diagram is provided showing an example protocol and method as may be triggered by a connected electronic device and implemented by each of the conductor switching components 60, 65. The protocol is provided to enable the conductor switching components 60, 65 to perform an allocation of conductors 20, 30, 35, 40 to signals according to the relevant interface standard, in this example a four pin USB standard. The flow diagram is shown in three parts, represented in Figures 2a, 2b and 2c for convenience. The process will be described initially in the context of the conductor switching component 60 of the first connector 5.

Referring initially to Figure 2a, the method starts and at 100 the connected electronic device or the conductor switching component 60 monitors each pin 40, 45, 50, 55 of the connector 5 to look for any change in its electrical condition. A change in electrical condition of a pin 40, 45, 50, 55 indicates for example that a use is intended for the USB interface by the connected device. Therefore, at 105, if any pin 40, 45, 50, 55 shows a change in electrical condition then, at 110, a prompt is generated to request confirmation of the use intended from a user of the connected device. For example, a message may be displayed on a display of the connected device, prompting a user to select the supply or receipt of electrical power over the interface, or a transfer of data between devices connected by the interconnect cable 1.

If, in this example, a USB interface is to be used to supply or to receive electrical power, e.g. to charge a battery or to operate the connected device, then the process continues as shown in Figure 2b. If the USB interface is to be used to transfer data, then the process continues as shown in Figure 2c. Alternatively, the use intended may be deduced automatically within the connected device or by the conductor switching component 60 and the respective process of Figure 2b or 2c may be selected.

Referring to Figure 2b, if at 110 it was indicated or deduced that the USB interface is to be used to supply or to receive electrical power then, at 120, the conductor switching component 60 generates a predetermined 'use-signal' (different in type to a signal defined for the interface), for example a voltage or pulse of a predetermined duration, and applies the signal to a first of the conductors 20, 25, 30, 35 of the cable 15. The other three of the conductors 20, 25, 30, 35 of the cable 15 are set to a GND state. The use-signal is generated to indicate that the interface is to be used to supply or to receive electrical power and, if received by the component 65 of the second connector 10, is recognised as an indication of such a use. A different use-signal is generated if the intended use is to transfer data, as will be described below with reference to Figure 2c. If the first of the conductors 20, 25, 30, 35 in the cable 15 is operational, the applied signal is conveyed over the respective conductor 20, 25, 30, 35 in the cable to the conductor switching component 65 of the connector 10.

If, at 125, the component 60 detects a predetermined acknowledgement signal at the first of the conductors 20, 25, 30, 35 within a predetermined time period of sending the use-signal, generated by the component 65 of the second connector 10 in response to a received use-signal, then, at 130, the component 60 stores a record indicating that the first of the conductors 20, 25, 30, 35 is operational. However, if an acknowledgement signal is not received within the predetermined time period then, at 135, the component 60 stores a record indicating that the first of the conductors 20, 25, 30, 35 is faulty. The conductor 20, 25, 30, 35 where it terminates in the connector 5 may not itself be faulty, but the conductor 20, 25, 30, 35 where it terminates in the connector 10 or somewhere else within the cable 15 may be faulty, preventing an end-to-end connection between the components 60, 65 through the cable 15.

If, at 140, not all the conductors 20, 25, 30, 35 of the cable 15 have been checked then, at 145, the use-signal is applied to a next of the conductors 20, 25, 30, 35, the other three of the conductors 20, 25, 30, 35 being set to the GND state. The process returns to 125 to await an acknowledgement signal at that next of the conductors 20, 25, 30, 35 from the component 65 of the second connector 10. The process continues until, at 140, all the conductors 20, 25, 30, 35 of the cable 15 have been checked and recorded either as operational or faulty. At this stage, the process continues at 150 to determine if two or more of the conductors 20, 25, 30, 35 of the cable 15 are operational. A minimum of two of the conductors 20, 25, 30, 35 are required to carry signals (V_{cc} and GND) for the supply or transfer power over the interface. If, at 150, at least two of the conductors 20, 25, 30, 35 are operational then, at 155, the conductor switching component 60 electrically connects one of the operational conductors to the V_{cc} pin 40 of the connector 5, and another of the operational pins to the GND pin 55 of the connector 5.

In a variation to the process shown in Figure 2b, the components 60, 65 may be configured to assign a first operational conductor 20, 25, 30, 35 of the cable 15, if any, to carry the V_{cc} signal and a second operational conductor 20, 25, 30, 35 of the cable 15, if any, to carry the GND signal state. The process shown in Figure 2b then terminates without determining the operational status or any other of the conductors 20, 25, 30, 35, if any, of the cable 15.

If, at 150, fewer than two operational conductors are found then, at 160, a message is generated, e.g. for display at the connected device, to indicate than the "Selected Operation is Not Possible" over the interconnect cable 1 and the process ends.

Referring to Figure 2c, a similar process is shown for execution by the component 60 if it is indicated at 115 that a data transfer is required. The process continues at 170 when the conductor switching component 60 generates a predetermined use-signal, for example a voltage or pulse of a predetermined duration different to that for the use-signal generated at 120 of Figure 2b, and applies the use-signal to a first of the conductors 20, 25, 30, 35 of the cable 15. The other three of the conductors 20, 25, 30, 35 of the cable 15 at set to a GND state. The use-signal is generated to indicate that the interface is to be used to transfer data and, if received by the component 65 of the second connector 10, is recognised as an indication of such a use. If the first of the conductors 20, 25, 30, 35 in the cable 15 is operational, the applied signal is conveyed over the respective conductor 20, 25, 30, 35 in the cable to the conductor switching component 65 of the connector 10.

If, at 175, the component 60 detects a predetermined acknowledgement signal at the first of the conductors 20, 25, 30, 35 within a predetermined time period of sending the use-signal, generated by the component 65 of the second connector 10 in response to a received use-signal, then, at 180, the component 60 stores a record indicating that the first of the conductors 20, 25, 30, 35 is operational. However, if an acknowledgement signal is not received within the predetermined time period then, at 185, the component 60 stores a record indicating that the first of the conductors 20, 25, 30, 35 is faulty.

If, at 190, not all the conductors 20, 25, 30, 35 of the cable 15 have been checked then, at 195, the use-signal is applied to a next of the conductors 20, 25, 30, 35 of the cable 15, the other three of the conductors 20, 25, 30, 35 being set to the GND state, and the process returns to 175 to await an acknowledgement signal at that next of the conductors 20, 25, 30, 35 from the component 65 of the second connector 10. The process continues until, at 190, all the conductors 20, 25, 30, 3' of the cable 15 have been checked and recorded either as operational or faulty. At this stage, the process continues at 200 to determine if three or more of the conductors 20, 25, 30, 35 of the cable 15 are operational. A minimum of three conductors are required to carry signals (Data+, Data-, GND) for the transfer data over the interface. If, at 200, at least three conductors 20, 25, 30, 35 are operational then, at 205, the conductor switching component 60 electrically connects one of the operational conductors to the Data+ pin 45 of the connector 5, another to the Data- pin 50 of the connector 5 and another of the operational pins to the GND pin 55 of the connector 5.

If, at 200, fewer than three operational conductors are found then, at 210, a message is generated, e.g. for display at the connected device, to indicate than the "Selected Operation is Not Possible" over the interconnect cable 1 and the process ends.

A similar variation may be applied to the process of Figure 2c as described above for Figure 2b, whereby the components 60, 65 may be configured to assign a first operational conductor 20, 25, 30, 35, if any, to carry the Data+ signal, a second operational conductor 20, 25, 30, 35, if any, to carry the Data- signal and a third operational conductor 20, 25, 30, 35 to carry the GND signal state. The process shown in Figure 2c then terminates without determining the operational status or any other of the conductors 20, 25, 30, 35, if any, of the cable 15.

In practice, it is necessary for only one of the components 60, 65 to perform the process described above with reference to Figure 2. In the context described, when the component 60 of the first connector 5 generates a use-signal at 125, 145, 170 or 195, the component 65 of the second connector 10, upon detecting such a use-signal on one of the conductors 20, 25, 30, 35 of the cable 15, generates a predetermined acknowledgement signal, for example the same use-signal as was received, and applies it to the same one of the conductors 20, 25, 30, 35 for detection by the component 60 at 125 and 175, as appropriate. The component 65 is also configured to apply a corresponding allocation of conductors 20, 25, 30, 35 of the cable 15 to signals defined for the interface, for example on the basis of the variation described above in which operational conductors 20, 25, 30, 35 are allocated to signals defined for the interface in a predetermined order. However, in a variation, the component 60 may be configured to generate a use-signal to indicate to the component 65 of the second connector 10 which of the operational conductors 20, 25, 30, 35 are to be assigned to the required signals of the interface. Implementation of such a use-signalling arrangement would be within the scope of expertise of a person of ordinary skill in the relevant art and may use operational conductors of the cable 15 to communicate the use-signals or another communications channel available between the conductor switching components 60, 65 or respective connected electronic devices, such as Bluetooth®.

Considering, for example, other interface standards in which connectors having more than four pins are used, a similar process may be applied as described above with reference to Figure 2 to determine which conductors are operational and which are faulty. However, according to the signals defined in the respective standard, further uses may be defined for the interface, each comprising a respective combination of signals of the interface. For example, according to the interface definition, two different data transfer rates may be defined: a low data rate using three conductors of the cable; and a higher data rate using five conductors of the cable. Each of the possible data transfer rates may be defined as a different use for the interface. Which of the data transfer rates may be provided is determined according to whether three conductors or five conductors are found to be operational.

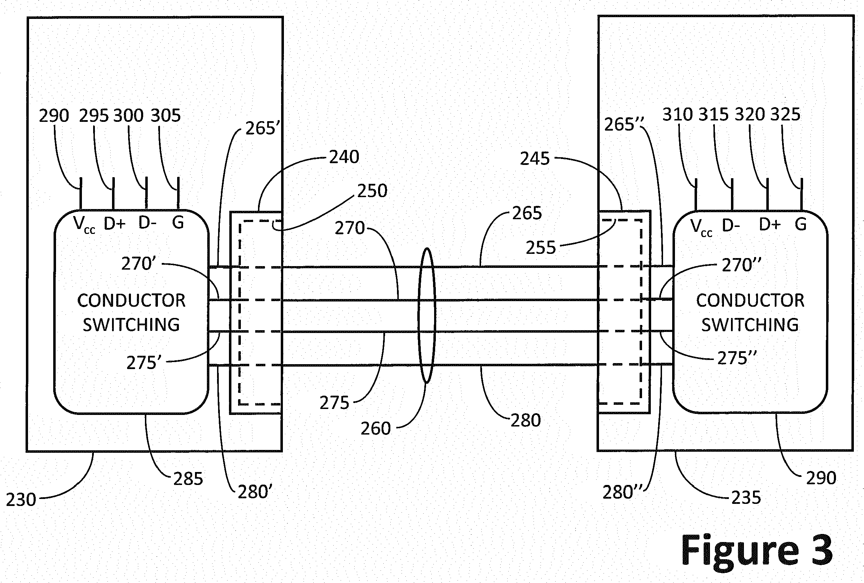

In the examples described above, the new functionality embodied in the conductor switching components 60, 65 was installed within connectors 5, 10 of an interconnect cable. An alternative example implementation will now be described with reference to Figure 3 in which conductor switching components having substantially the same functionality a described above, may be implemented as components within electronic devices. The electronic devices are provided with connectors defined according to the same other interface types, enabling an interconnection of the devices by a corresponding interconnect cable. Such an arrangement has the advantage that when pins of a connector provided in the electronic device become faulty, a costly replacement of a connector of the device may potentially be avoided or at least delayed.

Referring to Figure 3, a first electronic device 230 and a second electronic device 235 are shown, each provided with a socket type of connector 240, 245 having a structure defined according to a relevant interface standard, for example one of the USB standards. The connectors 240, 245 enable the electronic devices 230, 235 to be interconnected for the purposes of supplying electrical power or of transferring data via the interface. The devices 230, 235 are shown connected by a conventional interface cable as defined under the relevant interface standard, the interface cable comprising connectors 250, 255 designed to engage with the respective socket connectors 240, 245 of the electronic devices 230, 235. The connectors are attached to each end of a cable 260 having conductors 265, 270, 275, 280 for interconnecting respective pins 265', 270', 275', 280' of the connector 240 and respective pins 265", 270", 275", 280" of the connector 245.

Each electronic device 230, 235 is provided with a respective conductor switching component 285, 290. The conductor switching component 285 is arranged to link pins 265', 270', 275', 280' of the connector 240 to selected conductors 290, 295, 300, 305 of the electronic device 230. In the example of a USB interface, each of the conductors 290, 295, 300, 305 is assigned to carry one of the signals defined for the interface, in this example the signals V_{cc}, Data+, Data-, and GND respectively. Similarly, the conductor switching component 290 is arranged to link pins 265", 270", 275", 280" of the connector 245 to selected conductors 310, 315, 320, 325 of the electronic device 235. In the example of a USB interface, each of the conductors 290, 295, 300, 305 is assigned to carry one of the signals defined for the interface, in this example the signals V_{cc}, Data-, Data+, and GND respectively.

Comparing the arrangement of Figure 3 with that of Figure 1, both in structure of the arrangement and functionality implemented by the conductor switching components 285, 290: the conductors 290, 295, 300, 305 of the device 230 correspond to the pins 40,45, 50, 55 of the connector 5; the conductors 265, 270, 275, 280 and corresponding pins 265', 270', 275', 280' of the connector 240 correspond to the conductors 20, 25, 30, 35 of the cable 15; the conductors 310, 315, 320, 325 of the device 235 correspond to the pins 40', 45', 50', 55' of the connector 10; and the conductors 265, 270, 275, 280 of the cable 260 and corresponding pins 265", 270", 275", 280" of the connector 245 correspond to the conductors 20, 25, 30, 35 of the cable 15. The conductor switching component 285 of the device 230 is arranged to perform a similar role to the conductor switching component 60 of the connector 5 and the conductor switching component 290 of the device 235 is arranged to perform a similar role to the conductor switching component 65 of the connector 10. That is, the conductor switching component 285, for example, is configured to implement the process described above with reference to Figure 2 in conjunction with the component 290 to determine which of the conductors 265, 270, 275, 280 of the cable 260 and corresponding pins 265', 270', 275', 280' and 265", 270", 275", 280" of the connectors 240, 245 are operational.

The conductor switching component 285 then allocates one or more determined operational conductors 265, 270, 275, 280 and pins 265', 270', 275', 280' to a selected one or more of the conductors 290, 295, 300, 305 according to an indicated use for the interface and according to the assignment of conductors 290, 295, 300, 305 to carry the signals of the interface. The conductor switching component 290 performs the equivalent agreed allocation and connection for the pins 265", 270", 275", 280" to conductors 310, 315, 320, 325 of the device 235 to complete the interconnection between the devices 230, 235, according to the indicated use for the interface.

With the above comparison, a person of ordinary skill in the relevant art is able to see that the conductor switching components 285, 290 may perform an equivalent process in the context of the arrangement shown in Figure 3 to that described above with reference to Figure 1 and Figure 2.

The conductor switching components 60, 65 shown in Figure 1 and the conductor switching components 285, 290 shown in Figure 3, each described functionally with reference to Figure 2, may be implemented in hardware, software, firmware, or a combination thereof.

It will be understood that each of the conductor switching components 60, 65, 285, 290 may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data, for example recording the operational status of pins of a connector 5, 10, 240, 245. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A configurable interconnect cable (1) for connecting electronic devices together according to a predetermined interface standard, the interconnect cable (1) comprising a cable (15) having at least one connector (5) attached to the cable (15), the connector (5) comprising a plurality of pins (40, 45, 50, 55), each assigned to carry one of a plurality of signals defined for the interface standard according to a predetermined assignment of said signals to said pins (40, 45, 50, 55), the configurable interconnect cable comprising:
a plurality of cable conductors (20, 25, 30, 35); and
a conductor switching component (60) configured to determine which of the plurality of cable conductors (20, 25, 30, 35) is a faulty conductor and which is an operational conductor, and to link at least one of the determined operational cable conductors (20, 25, 30, 35) to a selected one of the plurality of pins (40, 45, 50, 55) of the connector (5).

2. The configurable interconnect cable (1) according to claim 1, wherein the conductor switching component (60) is configured to allocate at least one of the determined operational cable conductors (20, 25, 30, 35) to a respective one of the plurality of signals of the interface and to select at least one of the plurality of pins (40, 45, 50, 55) of the connector (5) to link to a respective at least one of the determined operational cable conductors (20, 25, 30, 35) according to the predetermined assignment.

3. The configurable interconnect cable (1) according to claim 2, wherein the conductor switching component (60) is configured to receive an indication of a required use defined for the interconnect cable (1), the required use comprising carrying a predetermined at least one of the plurality of signals defined for the interface standard.

4. The configurable interconnect cable (1) according to claim 3, wherein the conductor switching component (60) is configured to allocate at least one of the determined operational cable conductors (20, 25, 30, 35) to a respective one of the plurality of signals according to the required use.

5. The configurable interconnect cable (1) according to claim 3 or claim 4, wherein, for the required use, a predetermined number of cable conductors is defined, and wherein the conductor switching component (60) is configured to indicate that the required use is not available if the number of determined operational cable conductors (20, 25, 30, 35) is less than the predetermined number of cable conductors for the required use.

6. The configurable interconnect cable (1) according to any one of the preceding claims, wherein the plurality of signals defined for the interface comprise at least one signal for a supply of electrical power via the interface and at least one signal for a transfer of data via the interface.

7. A configurable interface for an electronic device (230), the electronic device (230) having a plurality of electrical conductors (290, 295, 300, 305), each assigned to carry one of a plurality of signals defined for the interface according to a predetermined assignment of said signals to said conductors (290, 295, 300, 305), the configurable interface comprising:
a plurality of electrical interface conductors (265', 270', 275', 280'); and
a conductor switching component (285) configured to determine which of the plurality of interface conductors (265', 270', 275', 280') is a faulty conductor and which is an operational conductor, and to link at least one of the determined operational interface conductors (265', 270', 275', 280') to a selected one of the plurality of conductors (290, 295, 300, 305) of the electronic device (230).

8. The configurable interface according to claim 7, wherein the conductor switching component (285) is configured to allocate at least one of the determined operational interface conductors (265', 270', 275', 280') to a respective one of the plurality of signals of the interface and to select at least one of the plurality of conductors (290, 295, 300, 305) of the electronic device (230) to link to a respective least one of the determined operational interface conductors (265', 270', 275', 280') according to the predetermined assignment.

9. The configurable interface according to claim 8, wherein the conductor switching component (285) is configured to receive an indication of a required use defined for the interface, the required use comprising carrying a predetermined at least one of the plurality of signals defined for the interface.

10. The configurable interface according to claim 9, wherein the conductor switching component (285) is configured to allocate at least one of the determined operational interface conductors (265', 270', 275', 280') to a respective at least one of the plurality of signals according to the required use.

11. The configurable interface according to claim 9 or claim 10, wherein, for the required use, a predetermined number of interface conductors is defined, and wherein the conductor switching component (285) is configured to indicate that the required use is not available if the number of determined operational interface conductors (265', 270', 275', 280') is less than the predetermined number of interface conductors for the required use.

12. The configurable interface according to any one of claims 7 to 11, wherein the plurality of electrical interface conductors (265', 270', 275', 280') comprise a plurality of pins of a connector (240) defined for the interface.

13. A method for configuring an interface (5, 10, 15) to an electronic device, the interface having a plurality of electrical conductors (40, 45, 50, 55) for connection to the electronic device, each assigned to carry one of a plurality of signals defined for the interface (5, 10, 15) according to a predetermined assignment of said signals to said conductors (40, 45, 50, 55), the interface (5, 10, 15) comprising a plurality of cable conductors (20, 25, 30, 35), and the method comprising:
(i) determining which of the plurality of cable conductors (20, 25, 30, 35) is a faulty conductor and which is an operational conductor; and
(ii) linking at least one of the determined operational cable conductors (20, 25, 30, 35) to a selected one of the plurality of conductors (40, 45, 50, 55) of the interface (5, 10, 15).

14. The method according to claim 13, wherein (ii) comprises allocating at least one of the determined operational cable conductors (20, 25, 30, 35) from (i) to a respective one of the plurality of signals defined for the interface (5, 10, 15) and selecting at least one of the plurality of conductors (40, 45, 50, 55) of the interface (5, 10, 15) to link to a respective at least one of the determined operational cable conductors (20, 25, 30, 35) according to the predetermined assignment.

15. The method according to claim 14, wherein (ii) comprises receiving an indication of a required use defined for the interface (5, 10, 15), the required use comprising carrying a predetermined at least one of the plurality of signals defined for the interface (5, 10, 15), and the protocol comprises allocating at least one of the determined operational cable conductors (20, 25, 30, 35) to a respective one of the plurality of signals according to the required use.
